# EUROPEAN PATENT SPECIFICATION

(11) **EP 3 309 438 B1**
(45) Date of publication and mention of the grant of the patent: **23.02.2022**
(21) Application number: 16807350.0
(22) Date of filing: 01.06.2016
(51) Int. Cl.: F16L 11/08, B32B 1/08, D04C 1/02, D04C 1/06, B32B 5/12, B32B 27/12, B32B 27/34, B32B 27/36, B32B 5/02, B32B 15/02, B32B 15/09, B32B 15/095, B32B 5/26, B32B 15/14, B32B 15/18, B32B 27/30, B32B 27/40

(54) **HYDROGEN-DISPENSING HOSE**
WASSERSTOFFAUSGABESCHLAUCH
TUYAU DE DISTRIBUTION D'HYDROGÈNE

(30) Priority: 09.06.2015 JP 2015116763; 05.02.2016 JP 2016020574
(43) Date of publication of application: 18.04.2018
(73) Proprietor: The Yokohama Rubber Co., Ltd., Minato-ku Tokyo 105-8685 (JP)
(72) Inventor: ISHII, Katsumasa, Hiratsuka-shi Kanagawa 254-8601 (JP); YUSA, Ikuma, Hiratsuka-shi Kanagawa 254-8601 (JP); SHIBANO, Hiroaki, Hiratsuka-shi Kanagawa 254-8601 (JP)
(74) Representative: Grünecker Patent- und Rechtsanwälte PartG mbB
(86) International application number: PCT/JP2016/066230
(87) International publication number: WO 2016/199643

(56) References cited:
- WO-A1-2011/067798
- JP-A- H0 914 518
- JP-A- H11 141 751
- JP-A- 2010 031 993
- JP-A- 2010 031 993
- JP-B2- S 544 090
- JP-B2- H0 380 095
- JP-U- S62 108 685
- JP-Y1- S4 912 260
- US-A- 4 384 595

## Description

### Technical Field

The present invention relates to a hydrogen-dispensing hose, and, more specifically, to a hydrogen-dispensing hose that allows improved pressure resistance and durability while suppressing disruption of and internal-pressure-induced dimensional changes in a reinforcing layer at a section at which a hose fitting is crimped.

### Background Art

Recent years have seen vigorous development in fuel cell vehicles and the like. Concurrently, hoses for dispensing hydrogen to fuel cell vehicles and the like from a dispenser installed in a hydrogen station have also been developed. Such hydrogen-dispensing hoses require superior hydrogen gas permeation resistance. Because fuel tanks must be filled with hydrogen gas at high pressure in order to increase the travel distance of a fuel cell vehicle or the like, a hydrogen-dispensing hose must have practical utility capable of withstanding high levels of internal pressure of 70 MPa and greater. Strengthening reinforcing layers is a common method of improving the pressure resistance of a hose; however, if a metal reinforcing material is used as a constituent member of a reinforcing layer, there is the risk of the metal being made brittle by the hydrogen, thereby reducing the life of the hose. Thus, proposals have been made to form all reinforcing materials by braiding polyparaphenylene benzobisoxazole (PBO) fibers (see Patent Documents 1 and 2).

A hose fitting including a nipple and a socket is attached to an end of the hose. Typically, to attach the hose fitting to the hose, an end of the hose is sandwiched between the nipple and the socket, and, in that state, the socket is crimped, i.e., deformed so as to decrease in diameter, by compressing the outer circumferential surface of the socket. Because a hydrogen-dispensing hose such as described above must have high pressure resistance, there must be a commensurate improvement in the leak resistance and seal integrity of the hose fitting, resulting in increased crimping force. Excessive crimping force will result in disruption of the braided structure of the reinforcing layers (especially the outermost reinforcing layer). In addition, as the pressure of the hydrogen flowing through the hose increases, the degree of dimensional change (increased diameter and axial contraction, or decreased diameter and axial elongation) in the hose will increase, thereby promoting disruption of the braided structure of the reinforcing layers in the section crimped by the hose fitting. Such disruption of the braided structure is a factor that reduces the pressure resistance and durability of the hose.

In addition, as hydrogen pressure increases, the inner surface layer is subjected to greater internal pressure, and is liable to exhibit dimensional change (diameter-expansive deformation, etc.). The inner surface layer contacting the hydrogen is subjected to low, below-freezing temperatures (for example, around -40°C), causing the layer to become brittle, and thus liable to be damaged even by small dimensional changes. Thus, it is necessary to suppress dimensional changes in the hose in order to improve the pressure resistance and durability of the hose.

A hose provided with a fiber reinforced layer formed by braiding PBO fibers has superior pressure resistance and durability. However, in a hose in which the reinforcing layer is constituted only by a fiber reinforced layer of braided high-strength fibers of this sort, it is difficult to ensure sufficient pressure resistance and durability if the pressure of the flowing hydrogen is greater than normal. This also impedes suppression of dimensional changes in the inner surface layer. Thus, improvement is desired.

### Citation List

### Patent Literature

Patent Document 1: JP 2010-31993 A
Patent Document 2: JP 2011-158054 A

### Summary of Invention

### Technical Problem

An object of the present invention is to provide a hydrogen-dispensing hose that allows improved pressure resistance and durability while suppressing disruption of and internal-pressure-induced dimensional changes in a reinforcing layer at a section at which a hose fitting is crimped.

### Solution to Problem

In order to achieve the object proposed above, a hydrogen-dispensing hose according to the present invention is a hydrogen-dispensing hose comprising a coaxially layered inner surface layer and outer surface layer; and at least two reinforcing layers coaxially layered between the coaxially layered inner layer and outer surface layer, the inner surface layer being formed from a thermoplastic resin having a dry hydrogen gas permeability coefficient at 90°C of 1×10⁻⁸ cc·cm/ cm²·sec.·cmHg or less, and the outer surface layer being formed from a thermoplastic resin. The outermost reinforcing layer out of the reinforcing layers is a wire braided layer formed by braiding metal wires, and the other reinforcing layers are fiber braided layers formed by braiding high-strength fibers, wherein the diameter of the metal wire is 0.25 mm to 0.4 mm, the braid angle thereof is 45° to 55° or alternatively greater than 55° up to 60°, and the braid density of the wire braided layer is 70% or greater, wherein the braid density indicates the area proportion of metal wires in the wire braided layer as a percentage; when the gap between metal wires is zero, the braid density is 100%.

### Advantageous Effects of Invention

In accordance with the present invention, the inner surface layer is formed from a thermoplastic resin of good hydrogen gas barrier properties, having a dry hydrogen gas permeability coefficient at 90°C of 1×10⁻⁸ cc·cm/cm²·sec.·cmHg or less, thereby allowing superior hydrogen gas permeation resistance to be obtained. The outermost reinforcing layer is a wire braided layer, thereby better impeding disruption of the braided structure compared to a fiber braided layer, even when a hose fitting is forcefully crimped onto a hose end. In addition, the reinforcing layer on the inner circumferential side of the wire braided layer is a fiber braided layer formed by braiding high-strength fibers, thereby yielding commensurate pressure resistance. Disruption of the braided structure of the reinforcing layers as a whole is thus impeded, even when high-pressure hydrogen flows through the hose.

Therefore, it is possible to sufficiently manifest the inherent capabilities of the reinforcing layer, which is advantageous in improving the pressure resistance and durability of the hose. It is also possible to suppress dimensional changes in the inner surface layer by virtue of the reinforcing layers, even if the hydrogen further increases in pressure. In addition, the formation of the inner surface layer from a thermoplastic resin of good hydrogen gas barrier properties and the placement of a wire braided layer as an outermost reinforcing layer, with a fiber braided layer interposed therebetween, remove the wire braided layer from the flowing hydrogen and suppress hydrogen embrittlement thereof. This structure also contributes to improved hose durability.

For example, assume specifications such that the thickness of the inner surface layer is 0.5 mm to 1.5 mm, and the inner diameter thereof is 5 mm to 9 mm. Such specifications allow increased hydrogen flow rate while ensuring the durability of the inner surface layer.

According to a first solution of the present invention, the diameter of the metal wire is 0.25 mm to 0.4 mm, the braid angle thereof is 45° to 55°, and the braid density of the wire braided layer is 70% or greater. Such specifications make it easier to ensure hose flexibility and metal wire durability while suppressing internal-pressure-induced dimensional changes in the hose.

Specifications such that there are at least two fiber braided layers, the diameter of the high-strength fibers constituting the fiber braided layers is 0.25 mm to 0.30 mm, the braid angle of the innermost fiber braided layer is 45° to 55°, and the braid angle of the second innermost fiber braided layer is 50° to 60° are also possible. Such specifications make it easier to ensure hose flexibility and high-strength fiber durability while suppressing internal-pressure-induced dimensional changes in the hose.

According to an alternative solution of the present invention, the diameter of the metal wire is 0.25 mm to 0.4 mm, the braid angle thereof is greater than 55° up to 60°, and the braid density of the wire braided layer is 70% or greater.

Such specifications are even more advantageous for ensuring hose flexibility and metal wire durability while suppressing internal-pressure-induced dimensional changes in the hose.

Specifications such that there are at least three fiber braided layers, the diameter of the high-strength fibers constituting the fiber braided layers is 0.25 mm to 0.30 mm, the braid angle of the innermost fiber braided layer is 43° to 55°, the braid angle of the second innermost fiber braided layer is 45° to 55°, and the braid angle of the third innermost fiber braided layer is 50° to 60° are also possible. Such specifications make it even easier to ensure hose flexibility and high-strength fiber durability while suppressing internal-pressure-induced dimensional changes in the hose.

Polyparaphenylene benzobisoxazole (PBO) fibers, for example, are used as the high-strength fibers.

### Brief Description of Drawings

FIG. 1 is a partially cut-away side view illustrating an example of the hydrogen-dispensing hose according to the present invention.
FIG. 2 is a transverse cross-sectional view of the hose illustrated in FIG. 1.
FIG. 3 is an illustration of an example of a dispenser installed at a hydrogen station.
FIG. 4 is a partially cut-away side view illustrating an examples of another embodiment of the hydrogen-dispensing hose according to the present invention.

### Description of Embodiments

The hydrogen-dispensing hose according to the present invention will be described hereafter on the basis of the embodiments illustrated in the drawings.

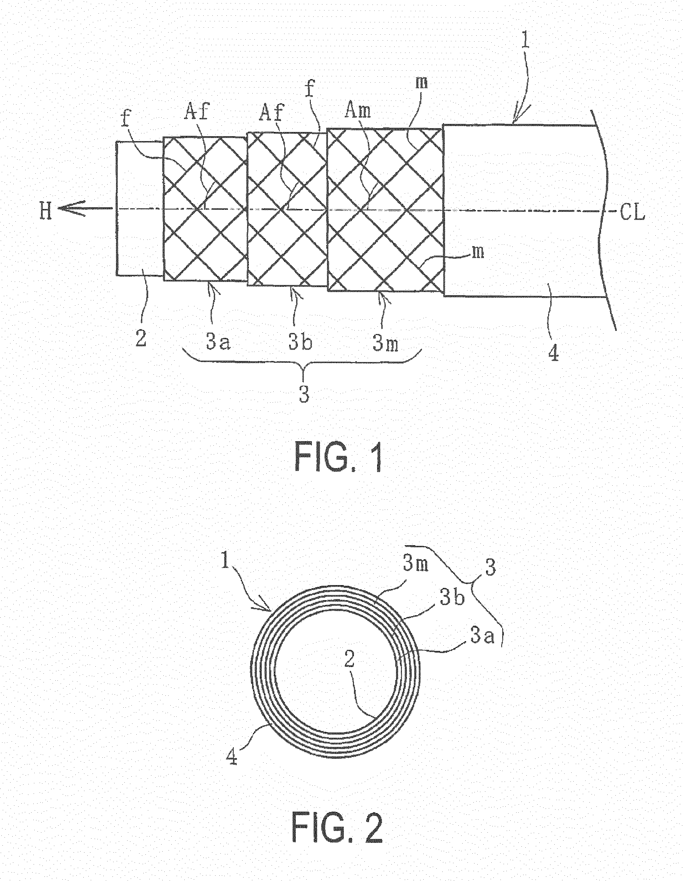

As illustrated in FIGS. 1 and 2, a hydrogen-dispensing hose 1 (hereafter referred to as hose 1 according to the present invention has a structure including, in order from the inner circumferential side thereof, an inner surface layer 2, reinforcing layers 3 (first fiber braided layer 3a, second fiber braided layer 3b, wire braided layer 3m) and an outer surface layer 4, all coaxially layered. The dot-dash line in FIG. 1 indicates the axial center of the hose.

The inner surface layer 2 is formed from a thermoplastic resin having a dry hydrogen gas permeability coefficient at 90°C of 1×10⁻⁸ cc·cm/cm²·sec.·cmHg or less. This gas permeability coefficient value is as measured according to JIS K 7126. Examples of the thermoplastic resin include nylon (nylon 6, nylon 66, nylon 11, etc.), polyacetal, ethylene-vinyl alcohol copolymers, etc.

Using a resin of good hydrogen gas barrier properties for the inner surface layer 2 in this way allows superior hydrogen gas permeation resistance to be obtained. The inner diameter of the inner surface layer 2 (i.e., the inner diameter of the hose 1) is, for example, 4.5 mm to 12 mm, more preferably 5 mm to 9 mm. Increasing the inner diameter of the inner surface layer 2 is advantageous for increasing the flow rate of hydrogen H, and decreasing the inner diameter is advantageous for ensuring pressure resistance.

The thickness of the inner surface layer 2 is, for example, 0.5 mm to 2.0 mm, more preferably 0.5 mm to 1.5 mm. It is preferable to increase the thickness in order to suppress dimensional changes in the inner surface layer 2. Conversely, it is preferable to reduce the thickness of the inner surface layer 2 in order to ensure flexibility on the part of the hose 1. In order to increase the flow rate of hydrogen H while ensuring the durability of the inner surface layer 2, the thickness of the inner surface layer 2 is preferably 0.5 mm to 1.5 mm, and the inner diameter thereof is preferably 5 mm to 9 mm.

The outer surface layer 4 is formed from a thermoplastic resin. Examples of the thermoplastic resin include polyurethanes and polyesters. The thickness of the outer surface layer 4 is, for example, 0.2 mm to 1.0 mm, more preferably 0.5 mm to 0.8 mm. The outer diameter of the outer surface layer 4 (i.e., the outer diameter of the hose 1) is, for example, 12 mm to 18 mm, more preferably 15 mm to 17 mm. Increasing the thickness of the outer surface layer 4 is advantageous for ensuring the weatherablity of the hose 1, and decreasing the outer diameter is advantageous for ensuring flexibility. In order to achieve a balance between weatherability and flexibility in the hose 1, the thickness and outer diameter of the outer surface layer 4 are preferably within the ranges stated above.

At least two reinforcing layers 3 are provided, of which the outermost layer is a wire braided layer 3m formed by braiding metal wires m. The other reinforcing layers 3 are fiber braided layers 3a, 3b formed by braiding high-strength fibers f. In the present embodiment, there are three reinforcing layers 3, with the two fiber braided layers 3a, 3b and the wire braided layer 3m being layered in that order starting from the inner circumferential side. There is no limitation to two fiber braided layers 3a, 3b; there can also be one layer, or three or more.

The high-strength fibers f are fibers having a tensile strength of 2 GPa or greater. Examples of the high-strength fibers f include polyparaphenylene benzobisoxazole fibers (PBO fibers), aramid fibers, and carbon fibers.

The diameter of the high-strength fibers f is, for example 0.25 mm to 0.30 mm. The braid angle Af of the first fiber braided layer 3a is, for example, 45° to 55°, and the braid angle Af of the second fiber braided layer 3b is, for example, 50° to 60°. The braid angle Af of the second fiber braided layer 3b is greater than the braid angle Af of the first fiber braided layer 3a. If there are three or more fiber braided layers, the braid angle Af of the innermost first fiber braided layer 3a is 45° to 55°, and the braid angle Af of the second fiber braided layer 3b and the other fiber braided layers is 50° to 60°. The farther outside the fiber braided layer is disposed, the greater the braid angle Af is.

As the fiber braided layers 3a, 3b are braided with the constituent high-strength fibers f in a deformed state (crushed) state, it is difficult to define the braid density thereof. Thus, defining in terms of fiber count (the number of high-strength fibers f wrapped around each reinforcing layer) instead of braid density, the fiber count will be, for example, 54 to 90 if the outer diameter of the outer circumferential surface around which the high-strength fibers f are wrapped is 7 mm. The fiber count will be, for example, 72 to 120 or 90 to 150 if the outer diameter of the outer circumferential surface around which the high-strength fibers f are wrapped is 10 mm or 12 mm, respectively.

Using high-strength fibers f having a diameter of 0.25 mm to 0.30 mm makes it easier to ensure flexibility on the part of the hose 1 and durability on the part of the high-strength fibers f while suppressing internal-pressure-induced dimensional changes in the hose 1.

For example, steel wire, stainless steel wire, piano wire, or the like is used as the metal wires m. According to a first solution of the present invention, the diameter of the metal wires m is 0.25 mm to 0.4 mm, more preferably 0.3 mm to 0.35 mm. The braid angle Am is 45° to 55°, and the braid density Dm of the wire braided layer 3m is 70% to 100%, preferably 80% to 95%. The braid density Dm indicates the area proportion of metal wires m in the wire braided layer 3m as a percentage; when the gap between metal wires m is zero, the braid density Dm is 100%.

It is preferable to increase the braid density Dm as the diameter of the metal wires m decreases in order to strike a suitable balance between pressure resistance and flexibility in the hose 1. If the braid density Dm is less than 70%, it will be difficult to ensure sufficient pressure resistance. Conversely, as the braid density Dm approaches 100%, flexibility will decrease, but not so much as to impede practical use. Using metal wires m having a diameter of 0.25 mm to 0.4 mm, a braid angle Am of 45° to 55°, and a wire braided layer 3m having a braid density Dm of 70% or greater makes it easier to ensure flexibility on the part of the hose 1 and durability on the part of the metal wires m while suppressing internal-pressure-induced dimensional changes in the hose 1.

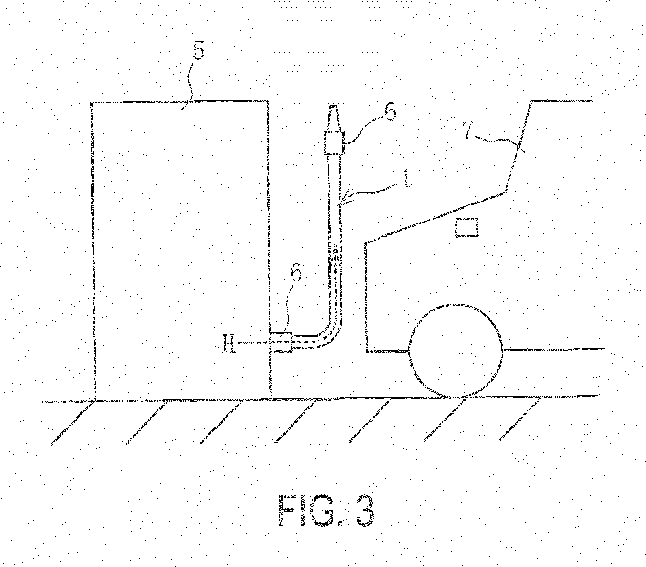

When a dispenser 5 installed at a hydrogen station is equipped with the hose 1 as illustrated in FIG. 3, hose fittings 6 are crimped and attached to both ends of the hose. Hydrogen H is supplied and dispensed from the dispenser 5 through the hose 1 to a vehicle 7 at a low temperature (e.g., -40° to -20°) and high pressure (e.g., 45 MPa to 87.5 MPa).

In accordance with the present hose 1, the inner surface layer 2 is formed from a thermoplastic resin having good hydrogen gas barrier properties as described above, thereby allowing superior hydrogen gas permeation resistance to be obtained. In other words, because the inner surface layer 2 provides a sufficient barrier against the hydrogen H flowing through the hose 1, the amount of hydrogen H permeating to the outer circumferential side of the inner surface layer 2 can be reduced.

Because the outermost reinforcing layer is the wire braided layer 3m, disruption of the braided structure of the crimped sections of the hose 1 can be better impeded, even when the hose fittings 6 are forcefully crimped, than if a reinforcing layer of braided fibers were used. In addition, the inner circumferential side of the wire braided layer 3m is constituted by the fiber braided layers 3a, 3b formed by braiding high-strength fibers f, thereby yielding commensurate pressure resistance. Disruption of the braided structure of the three reinforcing layers as a whole is thus impeded, even when high-pressure hydrogen H flows through the hose 1.

Thus, the braided structure is not greatly disrupted even if the reinforcing layers 3 are crimped, thereby allowing sufficient manifestation of the inherent capabilities of the reinforcing layers 3. This is advantageous in improving the pressure resistance and durability of the hose 1. It is also possible to suppress dimensional changes in the inner surface layer 2 by virtue of the reinforcing layers 3, even if the stream of hydrogen H further increases in pressure.

When filling the vehicle 7 with hydrogen H, extremely low-temperature (e.g., -40°C to -20°C) hydrogen H flows in contact with the inner surface layer 2, thereby embrittling the inner surface layer 2 due to the low temperature. In addition, the hydrogen H is highly pressurized (e.g., 45 MPa to 87.5 MPa); this pressure acts upon the inner surface layer 2 as internal pressure. The inner surface layer 2 exhibits dimensional change as the result of this internal pressure; because the inner surface layer 2 has been made brittle by the low temperatures, the chance of damage in these usage conditions increases, even in the face of small dimensional changes that would present no problem at standard temperatures.

In addition, because hydrogen H is the smallest molecule, it is capable of penetrating comparatively easily into the inner surface layer 2. This results in a vicious circle in which large amounts of hydrogen H penetrate through even microscopic tears in the inner surface layer 2, thereby increasing the damage. This particular problem arises in the hose 1, through which hydrogen H flows.

In the present invention, a wire braided layer 3m, the use of which was conventionally eschewed, is deliberately included along with the first fiber braided layer 3a and second fiber braided layer 3b formed by braiding high-strength fibers f. The load acting upon the hose 1 as the result of internal pressure is substantially borne by the first fiber braided layer 3a and the second fiber braided layer 3b. This solves the abovementioned particular problem.

In the present structure, the wire braided layer 3m does not substantially bear the load acting upon the hose 1 as the result of internal pressure. Thus, even if hydrogen embrittlement of the metal wires m making up the wire braided layer 3m were to occur, this would not immediately impede the use of the hose 1.

Only the one outermost layer of the reinforcing layers 3 is a wire braided layer 3m, and the other reinforcing layers 3 are the fiber braided layers 3a, 3b, thereby also ensuring sufficient flexibility on the part of the hose 1. This results in a structure in which the wire braided layer 3m does not substantially bear the load acting upon the hose 1 as the result of internal pressure, thereby eliminating the need to provide multiple wire braided layers 3m, and contributing not only to the flexibility but also reduced weight on the part of the hose 1.

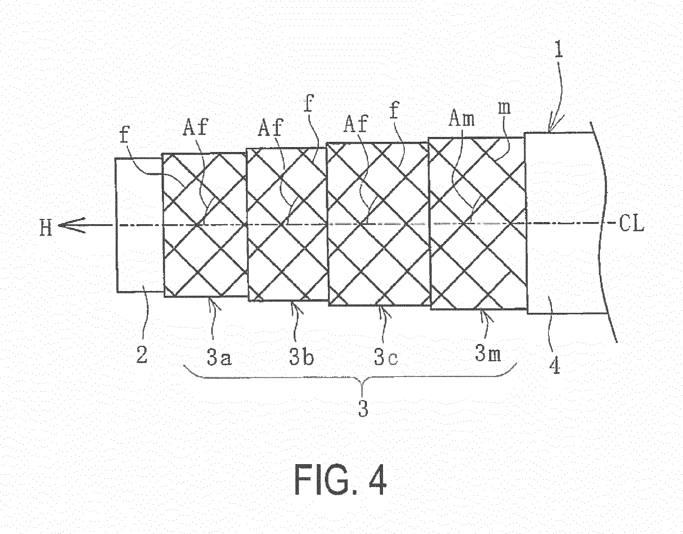

In the embodiment of a hose 1 illustrated in FIG. 4, there are four reinforcing layers 3, with three fiber braided layers 3a, 3b, 3c and a wire braided layer 3m being layered in that order starting from the inner circumferential side.

The diameter of the high-strength fibers f is, for example 0.25 mm to 0.30 mm. The braid angle Af of the first fiber braided layer 3a is, for example, 43° to 55°, the braid angle Af of the second fiber braided layer 3b is, for example, 45° to 55°, and the braid angle Af of the third fiber braided layer 3c is, for example, 50° to 60°. The braid angle Af of the second fiber braided layer 3b should be greater than the braid angle Af of the first fiber braided layer 3a, and the braid angle Af of the third fiber braided layer 3c should be greater than the braid angle Af of the second fiber braided layer 3b. For example, the difference between the braid angle Af of the first fiber braided layer 3a and the braid angle Af of the second fiber braided layer 3b should be at least 4°, and the difference between the braid angle Af of the second fiber braided layer 3b and the braid angle Af of the third fiber braided layer 3c should be at least 4°.

Thus, defining the fiber braided layers 3a, 3b, 3c in terms of fiber count (the number of high-strength fibers f wrapped around each reinforcing layer) instead of braid density, the fiber count will be, for example, 54 to 90 if the outer diameter of the outer circumferential surface around which the high-strength fibers f are wrapped is 7 mm. The fiber count will be, for example, 72 to 120 or 90 to to 150 if the outer diameter of the outer circumferential surface around which the high-strength fibers f arc wrapped is 10 mm or 12 mm, respectively.

The diameter of the metal wires m is, 0.25 mm to 0.4 mm, more preferably 0.3 mm to 0.35 mm. The braid angle Am is greater than 55° up to 60°, and the braid density Dm of the wire braided layer 3m is 70% to 100%, preferably 80% to 95%.

In the present embodiment, the braid angle Am of the metal wires m is greater than in the previous embodiment, and equal to or greater than the static angle (54.7°). In addition, there is a greater number of fiber braided layers 3a, 3b, 3c, and the fiber braided layers 3a, 3b, 3c have different braid angles Af.

This difference in specifications improves the failure pressure of the hose 1 of the present embodiment compared to the hose 1 of the previous embodiment. In addition, less dimensional change occurs when internal pressure acts upon the hose 1, thereby further improving dimensional stability and reduced strain upon the inner surface layer 2.

Specifically, when internal pressure acts upon the hose 1, the first fiber braided layer 3a and the second fiber braided layer 3b, for which the braid angle Af is substantially equal to or less than the static angle, increase in diameter as the braid angle Af approaches the static angle, efficiently transferring the internal pressure to the third fiber braided layer 3c and the wire braided layer 3m. As a result, the capabilities of the respective reinforcing layers 3 (3a, 3b, 3c, 3m) can be made to function in a balanced manner without placing an excessive pressure resistance load upon a specific reinforcing layer 3. In addition, the synergy of the increase in the number of fiber braided layers 3a, 3b, 3c and the imparting of each with a specific braid angle Af improves the failure pressure of the hose 1.

The braid angle Am of the metal wires m is equal to or greater than the static angle (54.7°); thus, when internal pressure acts upon the hose 1, the braid angle Am approaches the static angle, and the wire braided layer 3m suppresses an increase in the diameter of the hose 1. As a result, the degree of dimensional change in the hose 1 decreases, thereby enabling the effective reduction in strain (diameter-increasing deformation) in the inner surface layer 2. Concurrently, the durability of the hose 1 is improved, which is even more advantageous in lengthening the life of the hose 1.

When hydrogen is flowing through the hose 1, the inner surface layer 2 is at a low temperatures at or below the freezing point, thereby causing the inner surface layer 2 to become brittle and more prone to tearing. Thus, a hose 1 capable of sufficiently suppressing diameter-expanding distortion in the inner surface layer 2, as in the case of the present inner surface layer 2, has vastly improved practical utility.

When the degree of dimensional change in the hose 1 under internal pressure decreases, thereby suppressing lengthwise-directional changes in the hose 1, the generation of unnecessary lengthwise-directional force in the hose 1 while hydrogen H is being supplied and dispensed from the dispenser 5 to the vehicle 7 is inhibited. This is also advantageous for preventing the generation of force that would disturb the connection between the hose 1 and the hose fittings 6.

### Examples

Four analytical models (Examples 1-3, Comparative Example) of structures similar to that of the hose illustrated in FIG. 1 were prepared, with only the specifications of the reinforcing layers different as shown in Table 1, and analyzed and evaluated for disruption of the reinforcing layers and diameter increase (dimensional change) in the inner surface layers. The first layer in Table 1 is the innermost layer, the second layer is a layer layered on the outer circumferential surface of the first layer, and the third layer is the outermost layer. The dry hydrogen gas permeability coefficient of the inner surface layer at 90°C is 1×10⁻⁸ cc·cm/cm²·sec.·cmHg or less. Test samples of the four models were prepared, and hose fittings having identical specifications were crimped and attached to hose ends using identical levels of crimping force to create hose assemblies, which were evaluated for pressure resistance. In the pressure resistance test, failure pressure was measured according to the method set forth in JIS K 6330-2. The evaluation results are shown in Table 1. Failure pressure was evaluated in terms of an index against a reference value of 100 for the comparative example. A larger index value indicates greater pressure resistance. Failure mode is also indicated.

### Disruption of reinforcing layers

Hose fittings of identical specifications were crimped and attached to hose ends using identical levels of crimping force, and the degree of disruption (vertical displacement) of the braided structure in the crimped sections of the outermost reinforcing layers at a hose internal pressure of 80 MPa was evaluated in terms of an index against a reference value of 100 for the comparative example. A smaller index value indicates less disruption.

### Level of diameter-expanding deformation of inner surface layer

The level of diameter-expanding deformation of the inner diameter of the inner surface layer under conditions identical to those used to evaluate disruption of the reinforcing layers as described above was evaluated in terms of an index against a reference value of 100 for the comparative example. A smaller index value indicates less diameter-expanding deformation.

**[TABLE 1]**

| | | Examples | | | Comparative Example |
|---|---|---|---|---|---|
| | | 1 | 2 | 3 | |
| Inner surface layer | Material | Nylon 6 | | Nylon 11 | |
| | | Thickness: 1.0 mm; inner diameter: 8.0 mm | | | |
| Outer surface layer | | Material: polyester | | | |
| | | Thickness: 0.8 mm; outer diameter: 16 mm | | | |
| Reinforcing layer | First layer | Wire material | | | |
| | | PBO fibers | | | |
| | | Diameter (mm) | | | |
| | | 0.28 | | | |
| | | Braid angle (°) | | | |
| | | 46 | | | |
| | | Fiber count | | | |
| | | 96 | 96 | 96 | 96 |
| | Second layer | Wire material | | | |
| | | PBO fibers | | | |
| | | Diameter (mm) | | | |
| | | 0.28 | | | |
| | | Braid angle (°) | | | |
| | | 51 | | | |
| | | Fiber count | | | |
| | | 108 | 96 | 96 | 96 |
| | Third layer | Wire material | | | |
| | | Steel wire | | | PBO fibers |
| | | Diameter (mm) | | | |
| | | 0.35 | | | 0.28 |
| | | Braid angle (°) | | | |
| | | 50 | 51 | 53 | 56 |
| | | Braid density (%) | | | Fiber count |
| | | 82 | 82 | 82 | 96 |
| Disruption of reinforcing layers (index) | | 85 | 90 | 90 | 100 |
| Level of diameter-expanding deformation of inner surface layer (index) | | 70 | 75 | 75 | 100 |
| Failure pressure (index) | | 100 | 105 | 105 | 100 |
| Failure mode | | Hose body failure | | | Fitting base failure |

It is apparent from the results shown in Table 1 that Examples 1 to 3 exhibit less disruption of the braided structure of the outermost reinforcing layer than the comparative example, and less diameter-expanding deformation of the inner surface layer. In addition, the failure mode of the hoses of Examples 1 to 3 was hose body failure, thereby confirming that the inherent capability of the reinforcing layer was sufficiently manifested, and the layers had superior pressure resistance.

Next, as shown in Table 2, three test samples including a first fiber braided layer, a second fiber braided layer a third fiber braided layer, and a wire braided layer as reinforcing layers, and having only different reinforcing layer specifications as shown in Table 2 (Examples 4 to 6) were prepared in addition to the test sample including a first fiber braided layer, a second fiber braided layer, and a wire braided layer in that order starting from the inner circumferential side as reinforcing layers (Example 3) for a total of four test samples. Using these four test samples, hose fittings having identical specifications were crimped and attached to hose ends using identical levels of crimping force to create hose assemblies, which were evaluated for pressure resistance, dimensional change (change in length and change in outer diameter) during hose pressurization, and diameter-expanding deformation of the inner surface layer. The dry hydrogen gas permeability coefficient of the inner surface layer at 90°C was 1×10⁻⁸ cc·cm/cm²·sec.·cmHg or less. In the pressure resistance test, failure pressure was measured according to the method set forth in JIS K 6330-2. The evaluation results are shown in Table 2. Evaluation results were expressed in terms of an index against a reference value of 100 for the comparative example. Larger index values indicate more superior pressure resistance, and smaller index values indicate less dimensional change and diameter-expanding deformation.

**[Table 2]**

| | | Examples | | | |
|---|---|---|---|---|---|
| | | 3 | 4 | 5 | 6 |
| Inner surface layer | Material | Nylon 11 | | | |
| | | Thickness: 1.0 mm; inner diameter: 8.0 mm | | | |
| Outer surface layer | | Material: polyester | | | |
| | | Thickness: 0.8 mm; outer diameter: 16 mm | | | |
| Reinforcing layer | First fiber braided layer | Wire material | | | |
| | | PBO fibers | | | |
| | | Diameter (mm) | | | |
| | | 0.28 | | | |
| | | Braid angle (°) | | | |
| | | 46 | 43 | 47 | 53 |
| | | Fiber count | | | |
| | | 96 | 96 | 96 | 96 |
| | Second fiber braided layer | Wire material | | | |
| | | PBO fibers | | | |
| | | Diameter (mm) | | | |
| | | 0.28 | | | |
| | | Braid angle (°) | | | |
| | | 51 | 48 | 50 | 55 |
| | | Fiber count | | | |
| | | 96 | 96 | 96 | 96 |
| | Third fiber braided layer | Wire material | | | |
| | | PBO fibers | | | |
| | | Diameter (mm) | | | |
| | | 0.28 | | | |
| | | Braid angle (°) | | | |
| | | - | 52 | 56 | 55 |
| | | Fiber count | | | |
| | | - | 96 | 96 | 96 |
| | Wire braided layer | Wire material | | | |
| | | Steel wire | | | |
| | | Diameter (mm) | | | |
| | | 0.35 | | | |
| | | Braid angle (°) | | | |
| | | 53 | 56 | 57 | 57 |
| | | Braid density (%) | | | |
| | | 82 | 82 | 82 | 82 |
| Burst pressure (index) | | 100 | 160 | 160 | 110 |
| Change in hose length (index) | | 100 | 90 | 50 | 10 |
| Change in hose outer diameter (index) | | 100 | 75 | 40 | 25 |
| Level of diameter-expanding deformation of inner surface layer (index) | | 100 | 80 | 50 | 30 |

It is apparent from the results shown in Table 2 that Examples 4 to 6 have superior pressure resistance compared to Example 3, and less dimensional change (change in length and change in outer diameter) and diameter-expanding deformation of the inner surface layer under hose pressurization. It is known that suppressing diameter-expanding deformation (strain) of the inner surface layer under hose pressurization increases hose life, and it was also ascertained that hose life increases at least 1.5 times when diameter-expanding deformation of the inner surface layer is reduced by about 30%. Therefore, it is possible, according to Examples 4 to 6, to greatly improve hose life compared to Example 3.

### Reference Signs List

- 1: Hydrogen-dispensing hose
- 2: Inner surface layer
- 3: Reinforcing layer
- 3a: First fiber braided layer
- 3b: Second fiber braided layer
- 3c: Third fiber braided layer
- 3m: Wire braided layer
- 4: Outer surface layer
- 5: Dispenser
- 6: Hose fitting
- 7: Vehicle
- f: High-strength fibers
- m: Metal wire
- CL: Axial center of hose

## Claims

1. A hydrogen-dispensing hose, comprising:
a coaxially layered inner surface layer and outer surface layer; and at least two reinforcing layers coaxially layered between the coaxially layered inner layer and outer surface layer, the inner surface layer being formed from a thermoplastic resin having a dry hydrogen gas permeability coefficient at 90°C measured according to JIS K 7126 of 1×10⁻⁸ cc·cm/cm²·sec.·cmHg or less, and the outer surface layer being formed from a thermoplastic resin;
and
the other reinforcing layer being a fiber braided layer formed by braiding high-strength fibers; **characterized in that**
the outermost reinforcing layer out of the reinforcing layers is a wire braided layer formed by braiding metal wires,
wherein the diameter of the metal wire is 0.25 mm to 0.4 mm, the braid angle thereof is 45° to 55°, and the braid density of the wire braided layer is 70% or greater, wherein the braid density indicates the area proportion of metal wires in the wire braided layer as a percentage; when the gap between metal wires is zero, the braid density is 100%.

2. The hydrogen-dispensing hose according to claim 1, wherein the fiber braided layer is composed of at least two layers, the diameter of the high-strength fibers constituting the fiber braided layers is 0.25 mm to 0.30 mm, the braid angle of the innermost fiber braided layer is 45° to 55°, and the braid angle of the second innermost fiber braided layer is 50° to 60°.

3. A hydrogen-dispensing hose, comprising:
a coaxially layered inner surface layer and outer surface layer; and
at least two reinforcing layers coaxially layered between the coaxially layered inner layer and outer surface layer, the inner surface layer being formed from a thermoplastic resin having a dry hydrogen gas permeability coefficient at 90°C measured according to JIS K 7126 of 1×10⁻⁸ cc·cm/cm²·sec.·cmHg or less, and the outer surface layer being formed from a thermoplastic resin;
and
the other reinforcing layer being a fiber braided layer formed by braiding high-strength fibers; **characterized in that**
the outermost reinforcing layer out of the reinforcing layers is a wire braided layer formed by braiding metal wires,
wherein the diameter of the metal wire is 0.25 mm to 0.4 mm, the braid angle thereof is greater than 55° up to 60°, and the braid density of the wire braided layer is 70% or greater, wherein the braid density indicates the area proportion of metal wires in the wire braided layer as a percentage; when the gap between metal wires is zero, the braid density is 100%.

4. The hydrogen-dispensing hose according to claim 3, wherein the fiber braided layer is composed of at least three layers, the diameter of the high-strength fibers constituting the fiber braided layers is 0.25 mm to 0.30 mm, the braid angle of the innermost fiber braided layer is 43° to 55°, the braid angle of the second innermost fiber braided layer is 45° to 55°, and the braid angle of the third innermost fiber braided layer is 50° to 60°.

5. The hydrogen-dispensing hose according to any one of claims 1 to 4, wherein the thickness of the inner surface layer is 0.5 mm to 1.5 mm, and the inner diameter thereof is 5 mm to 9 mm.

6. The hydrogen-dispensing hose according to any of claims 1 to 5, wherein the high-strength fibers are polyparaphenylene benzobisoxazole fibers.

## Patentansprüche

1. Wasserstoff-Abgabeschlauch, der umfasst:
eine innere Oberflächenschicht und eine äußere Oberflächenschicht, die koaxial geschichtet sind; sowie
wenigstens zwei Verstärkungsschichten, die koaxial zwischen die innere Schicht und die äußere Oberflächenschicht geschichtet sind, die koaxial geschichtet sind, wobei die innere Oberflächenschicht aus einem thermoplastischen Harz mit einem Gaspermeabilitätskoeffizienten für trockenen Wasserstoff bei 90 °C, gemessen gemäß JIS K 7126, von 1×10⁻⁸ cc·cm/cm²·sec.·cmHg oder weniger besteht, und die äußere Oberflächenschicht aus einem thermoplastischen Harz besteht;
und
die andere Verstärkungsschicht eine aus Fasern geflochtene Schicht ist, die durch Flechten hochfester Fasern entsteht;
**dadurch gekennzeichnet, dass** die äußerste Verstärkungsschicht der Verstärkungsschichten eine aus Draht geflochtene Schicht ist, die durch Flechten von Metalldrähten entsteht,
wobei der Durchmesser des Metalldrahtes 0,25 mm bis 0,4 mm beträgt, sein Flechtwinkel 45° bis 55° beträgt und die Flechtdichte der aus Draht geflochtenen Schicht 70 % oder mehr beträgt, wobei die Flechtdichte den Flächenanteil von Metalldrähten in der aus Draht geflochtenen Schicht als Prozentsatz angibt und, wenn der Abstand zwischen den Metalldrähten Null beträgt, die Flechtdichte 100 % beträgt.

2. Wasserstoff-Abgabeschlauch nach Anspruch 1, wobei die aus Fasern geflochtene Schicht sich aus wenigstens zwei Schichten zusammensetzt, der Durchmesser der hochfesten Fasern, die die aus Fasern geflochtenen Schichten bilden, 0,25 mm bis 0,30 mm beträgt, der Flechtwinkel der innersten Schicht aus geflochtenen Fasern 45° bis 55° beträgt und der Flechtwinkel der zweitinnersten Schicht aus geflochtenen Fasern 50° bis 60° beträgt.

3. Wasserstoff-Abgabeschlauch, der umfasst:
eine innere Oberflächenschicht und eine äußere Oberflächenschicht, die koaxial geschichtet sind; sowie
wenigstens zwei Verstärkungsschichten, die koaxial zwischen die innere Schicht und die äußere Oberflächenschicht geschichtet sind, die koaxial geschichtet sind, wobei die innere Oberflächenschicht aus einem thermoplastischen Harz mit einem Gaspermeabilitätskoeffizienten für trockenen Wasserstoff bei 90 °C, gemessen gemäß JIS K 7126, von 1×10⁻⁸ cc·cm/cm²·sec.·cmHg oder weniger besteht, und die äußere Oberflächenschicht aus einem thermoplastischen Harz besteht;
und
die andere Verstärkungsschicht eine aus Fasern geflochtene Schicht ist, die durch Flechten hochfester Fasern entsteht;
**dadurch gekennzeichnet, dass** die äußerste Verstärkungsschicht der Verstärkungsschichten eine aus Draht geflochtene Schicht ist, die durch Flechten von Metalldrähten entsteht,
wobei der Durchmesser des Metalldrahtes 0,25 mm bis 0,4 mm beträgt, sein Flechtwinkel mehr als 55° bis 60° beträgt und die Flechtdichte der aus Draht geflochtenen Schicht 70 % oder mehr beträgt, wobei die Flechtdichte den Flächenanteil von Metalldrähten in der aus Draht geflochtenen Schicht als Prozentsatz angibt und, wenn der Abstand zwischen den Metalldrähten Null beträgt, die Flechtdichte 100 % beträgt.

4. Wasserstoff-Abgabeschlauch nach Anspruch 3, wobei die aus Fasern geflochtene Schicht sich aus wenigstens drei Schichten zusammensetzt, der Durchmesser der hochfesten Fasern, die die aus Fasern geflochtenen Schichten bilden, 0,25 mm bis 0,30 mm beträgt, der Flechtwinkel der innersten Schicht aus geflochtenen Fasern 43° bis 55° beträgt, der Flechtwinkel der zweitinnersten Schicht aus geflochtenen Fasern 45° bis 55° beträgt und der Flechtwinkel der drittinnersten Schicht aus geflochtenen Fasern 50° bis 60° beträgt.

5. Wasserstoff-Abgabeschlauch nach einem der Ansprüche 1 bis 4, wobei die Dicke der inneren Oberflächenschicht 0,5 mm bis 1,5 mm beträgt und ihr Innendurchmesser 5 mm bis 9 mm beträgt.

6. Wasserstoff-Abgabeschlauch nach einem der Ansprüche 1 bis 5, wobei die hochfesten Fasern Polyparaphenylenbenzobisoxazol-Fasern sind.

## Revendications

1. Tuyau de distribution d'hydrogène, comprenant :
une couche de surface interne et une couche de surface externe stratifiées coaxialement ; et
au moins deux couches de renfort stratifiées coaxialement entre la couche interne et la couche de surface externe stratifiées coaxialement, la couche de surface interne étant formée à partir de résine thermoplastique présentant un coefficient de perméabilité à l'hydrogène gazeux sec à 90 °C mesuré conformément à la norme JIS K 7126 inférieur ou égal à 1×10⁻⁸ cc·cm/cm²·sec.·cmHg, et la couche de surface externe étant formée à partir de résine thermoplastique ; et l'autre couche de renfort étant une couche de fibre tressée formée par tressage de fibres de haute résistance ;
**caractérisé en ce que**
la couche de renfort la plus externe parmi les couches de renfort est une couche de fil tressé formée par tressage de fils métalliques, dans lequel le diamètre du fil métallique est compris entre 0,25 mm et 0,4 mm, son angle de tressage est compris entre 45° et 55°, et la densité de tressage de la couche de fil tressé est supérieure ou égale à 70 %, dans lequel la densité de tressage indique le pourcentage de surface des fils métalliques dans la couche de fil tressé ; et quand l'intervalle entre les fils métalliques est nul, la densité de tressage est de 100 %.

2. Tuyau de distribution d'hydrogène selon la revendication 1, dans lequel la couche de fibre tressée est composée d'au moins deux couches, le diamètre des fibres de haute résistance constituant les couches de fibre tressée est compris entre 0,25 mm et 0,30 mm, l'angle de tressage de la couche de fibre tressée la plus interne est compris entre 45° à 55°, et l'angle de tressage de la deuxième couche de fibre tressée la plus interne est compris entre 50° et 60°.

3. Tuyau de distribution d'hydrogène, comprenant :
une couche de surface interne et une couche de surface externe stratifiées coaxialement ; et
au moins deux couches de renfort stratifiées coaxialement entre la couche interne et la couche de surface externe stratifiées coaxialement, la couche de surface interne étant formée à partir de résine thermoplastique présentant un coefficient de perméabilité à l'hydrogène gazeux sec à 90 °C mesuré conformément à la norme JIS K 7126 inférieur ou égal à 1×10⁻⁸ cc·cm/cm²·sec.·cmHg, et la couche de surface externe étant formée à partir de résine thermoplastique ; et l'autre couche de renfort étant une couche de fibre tressée formée par tressage de fibres de haute résistance ;
**caractérisé en ce que**
la couche de renfort la plus externe parmi les couches de renfort est une couche de fil tressé formée par tressage de fils métalliques,
dans lequel le diamètre du fil métallique est compris entre 0,25 mm et 0,4 mm, son angle de tressage est supérieur à 55° et peut atteindre 60°, et la densité de tressage de la couche de fil tressé est supérieure ou égale à 70 %, dans lequel la densité de tressage indique le pourcentage de surface des fils métalliques dans la couche de fil tressé ; et quand l'intervalle entre les fils métalliques est nul, la densité de tressage est de 100 %.

4. Tuyau de distribution d'hydrogène selon la revendication 3, dans lequel la couche de fibre tressée est composée d'au moins trois couches, le diamètre des fibres de haute résistance constituant les couches de fibre tressée est compris entre 0,25 mm et 0,30 mm, l'angle de tressage de la couche de fibre tressée la plus interne est compris entre 43° à 55°, l'angle de tressage de la deuxième couche de fibre tressée la plus interne est compris entre 45° à 55°, et l'angle de tressage de la troisième couche de fibre tressée la plus interne est compris entre 50° et 60°.

5. Tuyau de distribution d'hydrogène selon l'une quelconque des revendications 1 à 4, dans lequel l'épaisseur de la couche de surface interne est comprise entre 0,5 mm et 1,5 mm, et son diamètre interne est compris entre 5 mm et 9 mm.

6. Tuyau de distribution d'hydrogène selon l'une quelconque des revendications 1 à 5, dans lequel les fibres de haute résistance sont des fibres de poly paraphénylène benzobisoxazole.
